# DEMANDE DE BREVET EUROPEEN

(11) **EP 1 177 938 A1**
(43) Date de publication de la demande: **06.02.2002**
(21) Numéro de dépôt: 01402089.5
(22) Date de dépôt: 01.08.2001
(51) Int. Cl.: B60N 2/46, B60N 2/58, B60N 2/72

(54) **Accoudoir de paroi intérieure de véhicule automobile**

(30) Priorité: 02.08.2000 FR 0010216
(71) Demandeur: Faurecia Industries, 92100 Boulogne-Billancourt (FR)
(72) Inventeur: Heranney, Yves, 25200 Montbeliard (FR)
(74) Mandataire: Blot, Philippe Robert Emile

(57) **Abrégé**

Accoudoir de paroi intérieure de véhicule automobile, notamment de porte, comportant une paroi inférieure de support (7), fixée à ladite paroi intérieure, et une partie supérieure d'appui (20) fixée à la paroi inférieure de support (7) par des moyens de fixation (34,36,41). Lesdits moyens de fixation sont des moyens de fixation libérables.

## Description

L'invention concerne un accoudoir de paroi intérieure de véhicule automobile, notamment de porte, comportant une paroi inférieure de support, fixée à ladite paroi intérieure, et une partie supérieure d'appui fixée à la paroi inférieure de support par des moyens de fixation.

En général, les accoudoirs solidaires d'une porte ou d'une paroi de véhicule sont soit formés directement dans l'habillage intérieur de la porte, lequel est réalisé le plus souvent par moulage d'une seule pièce en matériau plastique rigide, soit formés par une pièce rapportée fixée rigidement à demeure sur la paroi de porte. De telles conceptions ne permettent pas d'ajuster la position de la surface d'appui de l'accoudoir en fonction de l'utilisateur. II en résulte pour ce dernier des conditions de confort qui ne sont pas optimales.

Dans certains véhicules haut de gamme, il est prévu un accoudoir central réglable, souvent par des moyens coûteux et encombrants non transposables à des accoudoirs de paroi.

L'un des buts principaux de l'invention est de remédier à ces inconvénients et de proposer un accoudoir de paroi qui autorise l'ajustement en hauteur de la surface d'appui de l'accoudoir, et qui soit simple de fabrication et d'utilisation.

A cet effet, les moyens de fixation sont des moyens de fixation libérables.

Grâce à cette disposition, la partie supérieure d'appui peut être démontée et remplacée.

Suivant d'autres caractéristiques :
- la partie supérieure d'appui comprend une garniture de rembourrage et un plateau rigide, qui présente une face inférieure reliée à la paroi inférieure par les moyens de fixation libérables et une face supérieure sur laquelle la garniture de rembourrage est fixée de façon amovible ;
- la garniture de rembourrage est un coussin de matériau souple recouvert d'un revêtement en feuille dont des bords coopèrent élastiquement avec des bords d'accrochage du plateau rigide, de façon à assurer la fixation amovible de la garniture de rembourrage sur le plateau ;
- les moyens de fixation libérables de la partie supérieure d'appui sur la paroi inférieure comportent une tige rigide sensiblement verticale, solidaire de la face inférieure du plateau rigide, et une cheminée complémentaire de ladite tige, solidaire de la paroi inférieure, de sorte que la tige soit insérable dans la cheminée suivant un mouvement sensiblement vertical descendant, et extractible suivant un mouvement de sens inverse ;
- le plateau et la tige rigide sont adaptés pour que la face inférieure dudit plateau coopère avec une butée solidaire de la paroi intérieure lorsque la tige est complètement insérée dans la cheminée, ladite butée formant un support pour le plateau ;
- dans la position d'insertion complète de la tige dans la cheminée, une partie du revêtement en feuille est enserrée entre un bord supérieur de la paroi inférieure de support et un bord d'accrochage du plateau rigide ;
- les moyens de fixation libérables comportent au moins un organe de friction en matériau élastique interposé entre la cheminée et la tige, ledit organe de friction étant adapté pour assurer la rétention par friction de la tige dans la cheminée et compenser leur jeu relatif ;
- l'accoudoir comporte un organe de préhension solidaire de la partie supérieure d'appui, qui est fixé par un organe de fixation démontable à une pièce de transmission de force solidaire de la paroi intérieure ; et
- l'organe de préhension est une pièce rapportée creuse disposée dans un évidement complémentaire de la garniture de rembourrage et fixée au plateau rigide, une pièce d'entretoise étant interposée entre l'organe de préhension et le plateau rigide pour régler leur position relative.

L'invention vise également un véhicule automobile comportant un accoudoir tel que décrit précédemment.

Un exemple de réalisation de l'invention va maintenant être décrit en regard des dessins annexés sur lesquels :
- la Figure 1 est une vue en plan schématique de la paroi intérieure d'une porte de véhicule automobile comportant un accoudoir suivant l'invention ;
- la Figure 2A est une coupe suivant la ligne 2-2 de l'accoudoir représenté à la Figure 1 ;
- les Figures 2B et 2C sont des vues analogues à la Figure 2A, avec des parties supérieures d'appui d'épaisseur supérieure ;
- la Figure 3 est une vue partielle en perspective éclatée du dispositif de fixation de la partie supérieure d'appui sur la coque rigide inférieure ; et
- les Figures 4A, 4B et 4C sont des sections suivant la ligne 4-4, à plus grande échelle, des accoudoirs représentés respectivement aux Figures 2A, 2B et 2C.

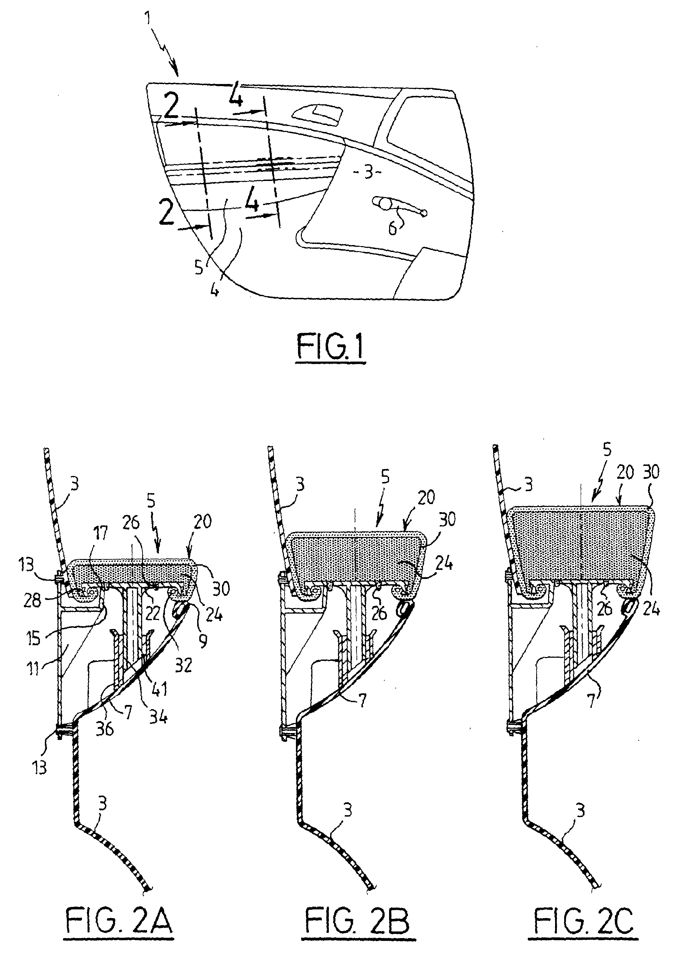

A la Figure 1, on a représenté schématiquement une porte 1 de véhicule automobile, recouverte du côté de l'intérieur du véhicule d'une garniture d'habillage 3, réalisée par exemple en matériau plastique rigide moulé, et comportant de ce même côté un accoudoir 5 et d'autres accessoires tels qu'une poignée de lève-vitres 6.

Comme il sera mieux vu à la Figure 2A, la garniture d'habillage 3 s'étend sensiblement suivant un plan vertical et présente un décrochement 7 constituant une coque rigide. La coque rigide 7 forme une partie inférieure de l'accoudoir 5, et présente un bord supérieur libre 9 tourné vers le haut et l'intérieur du véhicule.

La garniture d'habillage 3 est fixée par des moyens classiques (non représentés) à une paroi métallique de porte (également non représentée), de sorte que la coque rigide inférieure 7 de l'accoudoir 5 est rigidement liée à la porte du véhicule.

Un montant en équerre 11 est rigidement fixé à la garniture d'habillage 3 par des rivets 13 placés de part et d'autre du décrochement 7, et présente un bras de support 15 s'étendant essentiellement dans le volume intérieur défini par la coque rigide 7 de l'accoudoir, et tourné vers le haut en dépassant dudit volume intérieur. Un bord libre 17 du bras support 15 s'étend à un niveau situé légèrement au-dessus du bord supérieur 9 de la coque rigide 7.

L'accoudoir 5 comporte par ailleurs une partie supérieure d'appui 20, fixée à la coque rigide inférieure 7, et obturant l'accès au volume intérieur de l'accoudoir 5 défini par la coque rigide 7, en reposant sur le bord supérieur 9 et sur le bord libre 17 du bras de support 15.

La partie supérieure d'appui 20 de l'accoudoir 5 comprend notamment un plateau métallique 22 sur lequel est disposé et accroché un coussin de rembourrage 24, réalisé par exemple en mousse. Pour solidariser le coussin 24 avec le plateau 22, on prévoit des picots 26 formés sur une face inférieure du coussin 24, qui coopèrent avec des trous complémentaires pratiqués dans le plateau métallique 22. Le plateau métallique 22 présente sur sa face inférieure, des rebords longitudinaux d'accrochage 28 tournés vers le bas. Le coussin de rembourrage 24 et les rebords 28 du plateau métallique 22 sont recouverts par un revêtement commun 30 formé d'un matériau relativement souple en feuille, tel que du cuir ou un matériau synthétique, ce revêtement présentant des bourrelets 32 élastiques destinés à coopérer avec les rebords 28 en s'y accrochant de façon détachable.

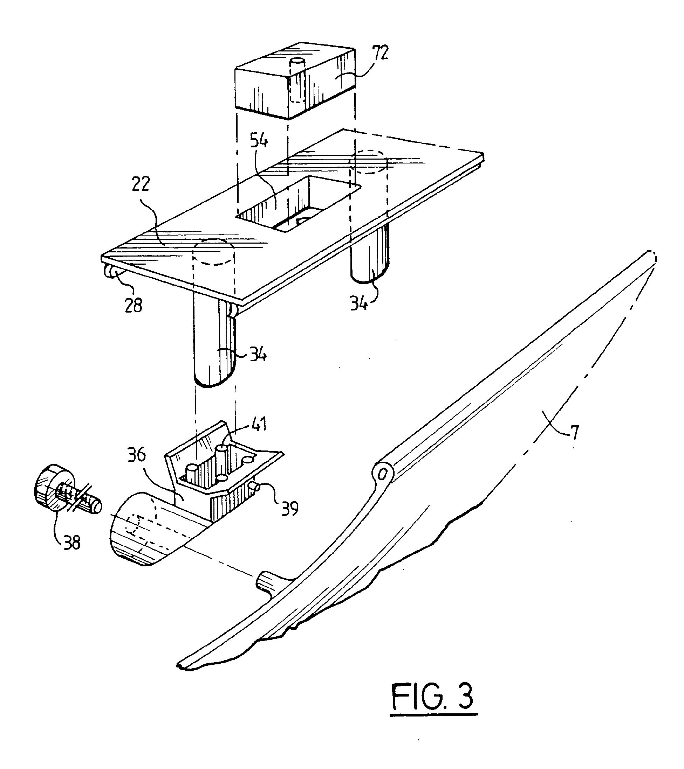

Le plateau 22 est solidarisé à la coque rigide inférieure 7 par des moyens de fixation libérables qui seront détaillés en référence à la Figure 3.

Les Figures 2A, 2B et 2C diffèrent les unes des autres par les dimensions du coussin 24 et du revêtement 30, les autres pièces de l'accoudoir 5 étant identiques.

A la Figure 3, on a représenté en perspective le plateau métallique 22 sans coussin de rembourrage 24 ni revêtement 30 ; on aussi représenté une partie des moyens de fixation du plateau à la coque rigide 7.

Le plateau métallique 22 présente deux tiges rigides 34 s'étendant verticalement depuis la face inférieure du plateau 22 et disposées longitudinalement et symétriquement sur le plateau. Chaque tige 34 est destinée à coopérer avec un réceptacle respectif 36, dont un seul a été représenté sur la Figure 3, qui se présente sous la forme d'une cheminée ouverte et évasée vers le haut, de section rectangulaire. Chaque réceptacle 36 est rigidement lié à la coque rigide inférieure 7 par au moins une vis 38 et un picot de centrage 39 ou tout autre moyen adapté.

A l'intérieur du réceptacle 36 sont disposées, le long de chacune de ses arêtes verticales, des barrettes cylindriques 41 en matériau élastique, tel que du caoutchouc. Les barrettes 41 sont par exemple collées ou surmoulées sur les parois intérieures du réceptacle 36 de façon à former avec lui un ensemble solidaire, et définissent entre elles un passage pour la tige 34 respective, adapté pour que l'insertion de la tige 34 dans le réceptacle 36 s'effectue moyennant une compression légère des barrettes 41. Les barrettes 41 constituent ainsi des organes de friction qui assurent la rétention de la tige 34 dans le réceptacle 36 et compensent leur jeu relatif.

En référence à nouveau aux Figures 2A, 2B, 2C, l'insertion complète des tiges 34 dans leur réceptacle 36 respectif conduit à un positionnement du plateau 22 tel que les rebords 28 portent sur le bord supérieur 9 de la coque rigide 7 en enserrant le revêtement 30.

On comprend aisément grâce à ces figures que l'on peut démonter la partie supérieure d'appui 20 en libérant les moyens de fixation du plateau métallique 22 sur la coque rigide inférieure 7, pour changer le coussin 24 et le revêtement 30 de façon à modifier la position en hauteur de la surface d'appui de l'accoudoir, déterminée par l'épaisseur du coussin 24.

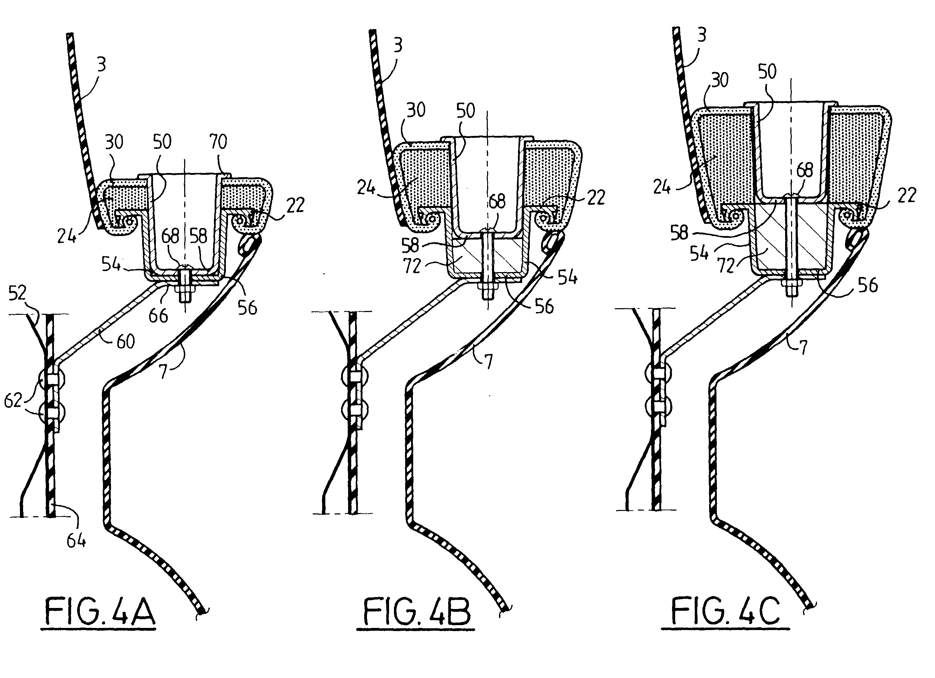

En référence aux Figures 4A, 4B et 4C, on va décrire le système mécanique permettant de positionner une poignée de préhension de l'accoudoir 5. Cette poignée d'accoudoir est désignée par la référence générale 50.

La poignée d'accoudoir 50 a la forme d'une coupelle creuse s'insérant dans un évidement complémentaire formé dans le coussin de rembourrage 24 et le plateau métallique 22. Elle permet à un utilisateur de saisir l'accoudoir en y glissant l'extrémité des doigts, et de fermer la porte de l'intérieur du véhicule en exerçant une traction sur la poignée 50. Afin d'éviter une déformation de l'accoudoir et des efforts d'arrachement trop importants au niveau de ses points de fixation, on prévoit généralement que les efforts exercés sur la poignée d'accoudoir 50 soient directement transmis à la paroi de porte ou à une plaque métallique de fixation solidaire de cette paroi de porte. L'accoudoir suivant l'invention étant prévu pour que différents coussins de rembourrage 24 s'adaptent à un même plateau métallique 22, il faut donc prévoir une poignée d'accoudoir 50 qui puisse être positionnée en fonction de l'épaisseur choisie du coussin 24, tout en assurant la transmission des efforts de traction vers la plaque de fixation 52.

Dans ce but, le plateau métallique 22 présente un évidement 54 (visible aussi sur la Figure 3) de forme complémentaire de celle de la poignée 50. L'évidement 54 présente une paroi de fond 56 dans laquelle est pratiqué un trou correspondant avec un trou pratiqué dans la paroi de fond 58 de la poignée 50. Un bras métallique 60 fixé au moyen de rivets 62 à la plaque de fixation 52 en enserrant une feuille d'étanchéité 64 fait saillie vers le volume intérieur de l'accoudoir 5 défini par la coque rigide 7. L'extrémité libre 66 du bras métallique 60 se présente sous la forme d'une plaque horizontale percée d'un trou correspondant à ceux des parois de fond 56,58 de l'évidement 54 du plateau 22 et de la poignée 50. La poignée 50 est fixée au plateau 22 et au bras métallique 60 par une vis 68 traversant les parois de fond 54,58 et la plaque 66 d'extrémité libre du bras métallique 60.

La poignée 50 présente par ailleurs une collerette d'appui 70 portant sur le revêtement 30 lorsque la poignée 50 est fixée sur le bras métallique 60.

Comme représenté aux Figures 4B et 4C, lorsque le coussin de rembourrage 24 est remplacé par un coussin d'épaisseur supérieure, on dispose une cale d'entretoise 72 perforée permettant de recevoir une vis 68 de plus grande longueur, entre la paroi de fond 58 de la poignée 50 et la paroi de fond 56 de l'évidement 54 du plateau 22.

Compte tenu de ce qui précède, il va de soi que le démontage de la partie supérieure d'appui 20 en vue du remplacement du coussin 24 et du revêtement 30, nécessite le démontage préalable de la vis 68 et de la poignée 50.

Comme on l'a vu, l'invention qui vient d'être décrite permet de réaliser, par des manipulations simples, des opérations de rechange de coussins d'accoudoir, et grâce à cela, un ajustement de la position en hauteur de la surface d'appui de l'accoudoir en fonction de l'utilisateur.

Les moyens mécaniques mis en jeu sont de conception et de fabrication extrêmement simples et permettent de répondre à des objectifs de personnalisation d'une partie intérieure de véhicule tout en maintenant un degré élevé de standardisation en fabrication.

## Revendications

1. Accoudoir de paroi intérieure de véhicule automobile, notamment de porte, comportant une paroi inférieure de support (7), fixée à ladite paroi intérieure, et une partie supérieure d'appui (20) fixée à la paroi inférieure de support (7) par des moyens de fixation (34,36,41,68), **caractérisé en ce que** lesdits moyens de fixation sont des moyens de fixation libérables.

2. Accoudoir suivant la revendication 1, **caractérisé en ce que** la partie supérieure d'appui (20) comprend une garniture de rembourrage (24) et un plateau rigide (22), qui présente une face inférieure reliée à la paroi inférieure (7) par les moyens de fixation libérables (34,36,41,68) et une face supérieure sur laquelle la garniture de rembourrage (24) est fixée de façon amovible.

3. Accoudoir suivant la revendication 2, **caractérisé en ce que** la garniture de rembourrage (24) est un coussin de matériau souple recouvert d'un revêtement en feuille (30) dont des bords (32) coopèrent élastiquement avec des bords d'accrochage (28) du plateau rigide (22), de façon à assurer la fixation amovible de la garniture de rembourrage (24) sur le plateau (22).

4. Accoudoir suivant la revendication 2 ou 3, **caractérisé en ce que** les moyens de fixation libérables (34,36,41,68) de la partie supérieure d'appui (20) sur la paroi inférieure (7) comportent une tige rigide (34) sensiblement verticale, solidaire de la face inférieure du plateau rigide (22), et une cheminée (36) complémentaire de ladite tige (34), solidaire de la paroi inférieure (7), de sorte que la tige (34) soit insérable dans la cheminée (36) suivant un mouvement sensiblement vertical descendant, et extractible suivant un mouvement de sens inverse.

5. Accoudoir suivant la revendication 4, **caractérisé en ce que** le plateau (22) et la tige rigide (34) sont adaptés pour que la face inférieure dudit plateau (22) coopère avec une butée (17) solidaire de la paroi intérieure lorsque la tige (34) est complètement insérée dans la cheminée (36), ladite butée (17) formant un support pour le plateau (22).

6. Accoudoir suivant la revendication 4 ou 5, **caractérisé en ce que** dans la position d'insertion complète de la tige (34) dans la cheminée (36), une partie du revêtement en feuille (30) est enserrée entre un bord supérieur (9) de la paroi inférieure de support (7) et un bord d'accrochage (28) du plateau rigide (22).

7. Accoudoir suivant l'une quelconque des revendications 4 à 6, **caractérisé en ce que** les moyens de fixation libérables (34,36,41,68) comportent au moins un organe de friction (41) en matériau élastique interposé entre la cheminée (36) et la tige (34), ledit organe de friction (41) étant adapté pour assurer la rétention par friction de la tige (34) dans la cheminée (36) et compenser leur jeu relatif.

8. Accoudoir suivant l'une quelconque des revendications 1 à 7, **caractérisé en ce qu'**il comporte un organe de préhension (50) solidaire de la partie supérieure d'appui (20), qui est fixé par un organe de fixation démontable (68) à une pièce de transmission de force (60) solidaire de la paroi intérieure.

9. Accoudoir suivant les revendications 2 et 8 prises ensembles, **caractérisé en ce que** l'organe de préhension (50) est une pièce rapportée creuse disposée dans un évidement complémentaire de la garniture de rembourrage (24) et fixée au plateau rigide (22), une pièce d'entretoise (72) étant interposée entre l'organe de préhension (50) et le plateau rigide (22) pour régler leur position relative.

10. Véhicule automobile comportant un accoudoir suivant l'une quelconque des revendications 1 à 9.
